# EUROPEAN PATENT SPECIFICATION

(11) **EP 2 637 380 B1**
(45) Date of publication and mention of the grant of the patent: **22.08.2018**
(21) Application number: 12001539.1
(22) Date of filing: 07.03.2012
(51) Int. Cl.: H04L 29/08, H04L 12/54

(54) **TELEMATIC SYSTEM**
TELEMATIKSYSTEM
SYSTÈME TÉLÉMATIQUE

(43) Date of publication of application: 11.09.2013
(73) Proprietor: Harman Becker Automotive Systems GmbH, 76307 Karlsbad (DE)
(72) Inventor: Guenkova-Luy, Teodora, 89091 Ulm (DE); Clauss, Martin, 88444 Ummendorf (DE); Abt, Oliver, 89134 Blaustein (DE)
(74) Representative: Grünecker Patent- und Rechtsanwälte PartG mbB

(56) References cited:
- EP-A1- 2 575 301
- WO-A1-2005/062652
- US-A1- 2005 049 021
- US-A1- 2007 255 797
- US-A1- 2011 199 962

## Description

### Field of Invention

The present invention relates to telematic systems, in particular, automotive telematic systems, wherein a plurality of Network Access Devices is provided for a variety of applications making use of one or more media.

### Background of the invention

Telecommunication, mobile services become nowadays ubiquitously available in various environments. The general application of such services is indicated as telematics, which means the integrated application of telecommunications and informatics, whereby technologies for sending, receiving and storing information via telecommunication devices are put into operation for realization, for example, of home and business applications. For example, in the automotive environment vehicular infotainment and telematics are offered via multiple devices both installed in the vehicle and mobile devices carried by a user and possibly connected to a vehicle communication system, for instance terminal devices like Personal Digital Assistants and mobile phones.

US 2007/255797 A1 discloses a method for selecting an interface using an access list on a multimode wireless device, wherein the multimode device contains technology specific access lists, for example, provided for CDMA, GSM, WLAN, etc., and wherein the mobile device generates a set of application specific access lists for sorting/ranking network entries from the technology specific access lists based on their suitability for a particular application to be run on the mobile device. Each of the application specific access lists is generated according to the requirements of a particular application, and a selection process is performed for prioritizing a technology, wherein the selection process is aware of both technical capabilities of available wireless technologies and applications likely to be operated on the multimode device.

WO 2005/062652 A1 relates to the access selection to access networks as UMTS, UTRAN, WLAN, etc., and discloses a method for allowing a particular user terminal in a network to access a plurality of radio based access networks of diverse access technologies.

US 2011/199962 A1 discloses a method for controlling access technology selection, wherein a plurality of access networks can be selected for use with an application invoked at a terminal according to a preference associated with the application, wherein the preference takes into account at least a network service provider preference, a subscriber preference, a subscriber subscription preference and an application content provider preference, and wherein an Application Policy is defined to allow access technology selections associated with applications invoked within multiple NADs.

US 2005/049021 A1 teaches that a link between a Communication device and a service center may be established for placing **either** a voice call **or** for transmitting a data message. According to the teaching of that document access to an NAD is controlled based on the status of the NAD or a geographical location.

EP 2 575 301 A1 teaches a computer-implemented method for controlling an automotive terminal system installed in a vehicle and connected to a communication network and comprising multiple network access devices, NADs, as terminal devices, a database and a computer system, the method comprising reading, by the computer system, information on associations between the NADs and media including voice data and non-voice packet-based data and applications to be run on the computer system and/or the NADs.

In order to apply different devices of a telematic system according to their individual capabilities, customer requirements and/or provider restrictions specific rules have to be defined in order to have the system to decide on what device is to be chosen for what kind of application media under what circumstances. In this context, Quality of Service (QoS) strategies have been implemented in the past that, in particular, allow for end-to-end management of some terminal equipment. However, such known strategies do not concern the management of multiple individual telematic devices (Network Access Devices) comprised in a terminal equipment but rather treat the entire terminal equipment as a single network access device. Thus, there is still a need for managing the usage of multiple telematic devices of specific terminal equipment that may belong to one and the same or different provider systems.

### Description of the Invention

The above-mentioned objects are addressed by the method according to claim 1. The claimed computer-implemented method for controlling an automotive terminal system installed in a vehicle and connected to a communication network and comprising multiple network access devices, NADs, a database and a computer system, comprises the steps of
reading, by the computer system, information on associations between the NADs and media including voice data and non-voice packet-based data and applications to be run on the computer system and/or the NADs;
storing at least a part of the information in the database; and
based on the read information controlling, by the computer system, the access of
a) at least one of the applications to at least one of the NADs and at least one of
b) at least one of the NADs to a media and c) at least one of the applications to a media;
and wherein
the information comprises provider rules for associations between providers and NADs for providers providing services via the communication network and/or constraints on associations between NADs and applications;
and further comprising
running, by the computer system, a particular application on a particular one of the NADs and controlling association of the particular NAD with applications such that it is only associated with another application different from the particular application, if another application of higher priority than the particular application is to use the particular NAD.

The communication network may comprise any wide-area network like the Universal Mobile Telecommunications System (UMTS) network and/or a Global System for Mobile (GSM) Communications network, etc. In particular, the NADs may be connected to the Internet under the control of the computer system.

The computer-implemented method may be implemented in a computer system installed in a vehicle, for example, an automobile. In this case, the computer system is part of an in-vehicle communication system. The car computer enables the possibility to connect multiple NADs which can be applied as a single modem from the point of view of the applications in the car thereby increasing the effective bandwidth for the applications running their data over the NADs and guaranteeing voice and packet-based (non-voice) data parallelism for applications associated with data and/or voice contents. In particular, the bundling of the connectivity capabilities of the NADs may serve the requirements of multiple users utilizing the same car computer system.

In GSM-Networks typical media include voice data and non-voice packet-based data, e.g. for any IP-transport purposes. In general, the packet-based data can be considered also as different media types in consideration with the fact which coding mechanisms for the media is applied, e.g. Hypertext Transfer Protocol (HTTP) for any text and non-streaming data, or Real-Time Protocol (RTP) for streaming data like music or video, etc. Typical applications include telephony, Internet browsing/uploading/downloading, mailing, navigating, etc. Mobile phones, mobile computers and Personal Digital Assistants are representative examples for the NADs.

In order to efficiently manage operation of the terminal system association between the NADs, the media and applications are established. By association it is meant assignment of or mapping between individual NADs and applications to be run on them and the respective media used by an application. According to the inventive method information is read that allow for assigning a particular one of the NADs to some particular application and media. The method may comprise generating for each of a plurality of applications and the associated media a list of operable NADs. The information comprises particular constraints that, in principle, can be provided by a manufacturer, a user and/or a provider of a service carried on the communication network. At least part of the information is stored in a database of the terminal system. The information may particularly comprise a prioritization scheme of associations. For example, if more than one NAD is suitable for a particular application and media each of these NADs can be given some priority value such that in the case that all or some of these NADs is actually available for the application / media the available NAD with the highest priority can be selected.

Different from the art, the terminal system is not treated as one single user/entity without differentiating between the individual NADs comprised in the terminal system. Rather, unique associations between individual NADs, particular applications and the media used are established thereby achieving efficient operation when communicating via the communication network basically without disturbances or interruptions during the operation of applications.

According to an embodiment of the herein disclosed method for controlling a terminal system connected to a communication network the information comprises Service Level Agreements for the applications. Service Level Agreements (SLAs) are provided, for example, by providers providing telecommunication services and define restrictions for the execution of applications with a scope predefined by the provider (see, for example, EP 2 159 974). According to this embodiment, it is assumed that SLAs are assigned to applications defining whether an application is allowed by a particular provider and that the terminal system understands and makes use of the SLAs. In addition, constraints with respect to the associations of NADs with providers are taken into account and particular applications and NADs are associated with each other based on the SLAs and such constraints.

In the method of the present invention dynamic media/application/NADs association is possible, i.e., besides static association it is envisaged that particular associations can be changed in time. According to an embodiment the method may further comprise running a particular application on a particular one of the NADs and controlling association of the particular NAD with applications such that it is only associated with another application different from the particular application, if either the particular application is completed or another application of higher priority than the particular application is to use the particular NAD. Thereby, it is guaranteed that an actually running application is not interrupted as long as the NAD used by it is available and no other higher priority application requests for that NAD.

The computer-implemented method may further comprise running a particular application on a particular one of the NADs of the list of operable NADs mentioned above when another NAD of the list is not available and allowing for association of the particular application with the other NAD of the list after it becomes available only when media accessed by the particular one of the NADs of the list used in the particular application is not active. In other words, the application will only be changed to the NAD that becomes available after start of the application on another NAD when no interruption of the media would result from such a change.

Furthermore, the method may comprise running a first application on a first NAD using a first media and subsequently starting a second application on one or more NADs using one or more media wherein the step of starting comprises re-associating the first NAD and the first application and/or the first media such that the first application at least partly continues running on a second NAD and/or the first NAD continues running the first application using a second media of the first application. Depending on the available resources some re-association may, thus, be performed dynamically.

According to another example, the method may comprise running a first application on a first NAD using a first media and subsequently starting using a second media by the first application only on an NAD that is not already running an application using the second media. Interruption of media is avoided, thereby, even if a second media is necessary for the first application after starting running the same.

According to an even further example, the method may comprise running an application on a first NAD connected to the communication network and subsequently changing connection of the communication network to a second NAD and continuing running the application on the second NAD. Thus, it is not only controlled which one of the multiple NADs connects to and uses the communication network for a particular application but also it is reacted to changes in the connection from the communication network to the NAD, for example in cases of network signal changes, handovers or re-attachments to the infrastructure.

Consider, for example, the terminal system being part of an automotive communication system installed in an automobile. During the travel of the automobile it may happen that a high quality WLAN network becomes available (due to some WLAN hotspot, for instance). In such a case, the computer system of the terminal system may switch connection of at least one of the NADs from a UMTS network, for example, to the WLAN network. Thus, both signal quality of the individual NADs and communication network quality of different available communication networks can be taken into account when controlling the transfer of data between the communication network and the NADs.

It is, furthermore, provided a computer program product, comprising one or more computer readable media having computer-executable instructions for performing the steps of the method according to one of the above-described examples.

In addition, it is provided an automotive terminal system installed in a vehicle and configured for connection to a communication network, comprising
multiple network access devices, NADs, configured for running applications using media including voice data and non-voice packet-based data;
a computer system configured to control association between the NADs and the applications and the media based on information comprising a) provider rules for associations between providers and NADs for providers providing services via the communication network and b) constraints on associations between NADs and applications; and wherein
the computer system is configured to control association of a particular one of the NADs on which a particular application is runby the computer system with applications such that it is only associated with another application different from the particular application, if another application of higher priority than the particular application is to use the particular NAD; and
further comprising a database configured for storing at least part of the information and wherein the computer system is configured to read the at least part of the information from the database.

The terminal system may further comprise a database configured for storing at least part of the information and wherein the computer system is configured to read the at least part of the information from the database. In particular, the terminal system can be an automotive terminal system installed in a vehicle, for example, an automobile.

Additional features and advantages of the present invention will be described with reference to the drawings. In the description, reference is made to the accompanying figures that are meant to illustrate preferred embodiments of the invention. It is understood that such embodiments do not represent the full scope of the invention.
Figure 1 illustrates the management of data and voice traffic on different NADs comprised in some terminal equipment in accordance with an example of the present invention.
Figure 2 illustrates the management of data according to a particular embodiment of the present application wherein two NADs are, in principle, capable to be used in the same application.
Figure 3 illustrates provider-device association constraints.
Figures 4 to 7 illustrate particular examples for device-association for applications according to the present invention.
Figure 8 illustrates an example of an inventive media distribution algorithm.

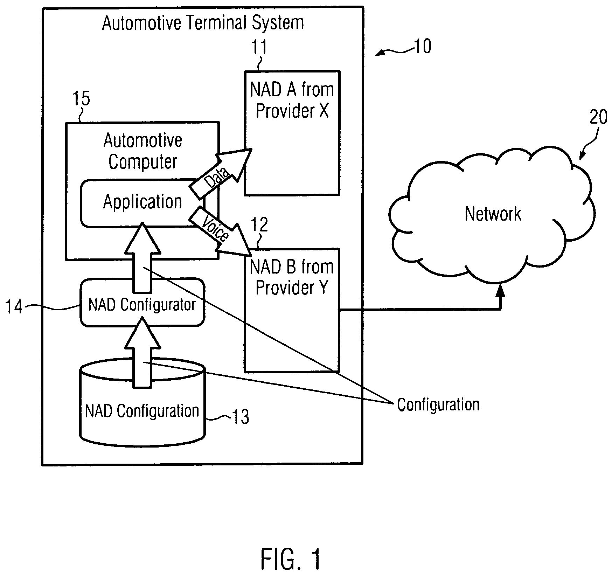

Consider an automotive terminal system 10 communicating with a communication network 20 as it is illustrated in Figure 1. The communication network 20 may be any wireless high-mobility wide-area network or combination of such wireless networks. The communication network 20 may comprise of but is not limited to technologies like Wireless Local Area Network (WLAN) and/or a General Packet Radios Service (GPRS) network and/or a Global System for Mobile Communications (GSM) network and/or a Universal Mobile Telecommunications System (UMTS) and/or Long-Term-Evolution (LTE) network. All mentioned above technologies belong to IEEE (Institute of Electrical and Electronics Engineers) or 3GPP (3rd Generation Partnership Project) standardization efforts and details thereof can be referred to at the respective standardisation board/-s.
The data exchanged via the communication network 20 can be, in general, IP-data that can be static data like text or dynamic like voice, video, etc., or any digitally coded data like GSM-voice or SMS-text, depending on the used coding and protocols for these information types.
The automotive terminal system 10 comprises network access devices 11 and 12. The network access devices (NADs) 11 and 12 may belong to different provider systems and may be a mobile computer, mobile phone or build-in telephone. The automotive terminal system 10, furthermore, comprises a database 13 storing rules determining how different media are associated with NADs for what kind of application. Database 13 may, particularly, store information on provider restrictions and customer/provider prioritization schemes. The automotive terminal system 10 comprises an NAD configurator 14, for example, in form of a part of any computer comprised in the automotive terminal system 10. The NAD configurator 14 represents a decision logic (in form of a software entity) for the applications that indicates under what conditions which NAD has to be applied for what media. In addition, the automotive terminal system 10 comprises an automotive computer 15 for running applications. The NAD configurator 14 may be implemented on the same automotive computer 15. The NAD configuration database 13 can be located on a different computer of the automotive terminal system 10 as compared to the automotive computer 15 and/or the computer whereon the NAD configurator 14 is implemented.
In the example shown in Figure 1, the NAD configuration database 13 and the NAD configurator 14 rule management of the NADs 11 and 12, i.e., communication of these devices with the communication network 20 based on an explicit rule indicating that application's (non-voiced, packet-based) data and voice media shall be associated with different devices, i.e., (non-voiced) data with NAD 11 and voice with NAD 12. Such a rule, for example, implies that the application cannot be run, if one of the NADs 11 and 12 is not operable.

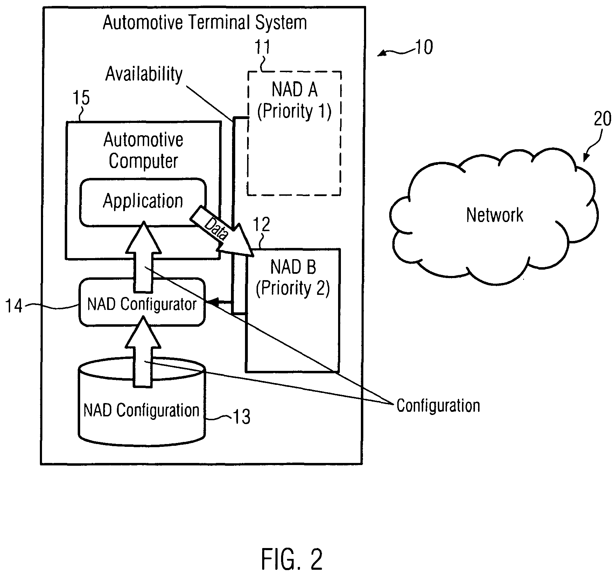

Figure 2 shows a similar system to that shown in Figure 1. However, in this case an explicit rule governing the order (priority) of NADs 11 and 12 is implemented. If the two NADs 11 and 12 provide comparable capabilities the decision logic 14 must know about the prioritization of the devices 11 and 12 when both are operable for an application. In the shown example, NAD 11 is not available and, thus, the second device 12 is chosen. It should be noted that, whereas in Figures 1 and 2 an automotive terminal system 10 is shown, in principle, any computer system configured for network communication, can be used in the present invention.

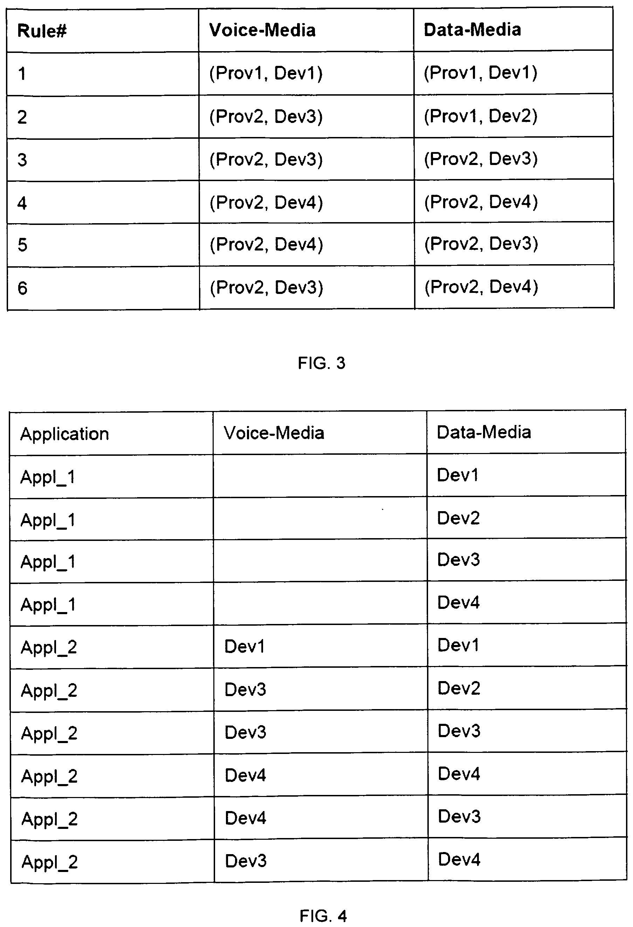

Explicit rules for managing the usage of NADs for different media and applications may be based on pairs of types of providers and physical devices indicating system (virtual) slots, for example, USB slots, where NADs might be coupled. The user of the automotive terminal system 10 shown in Figures 1 and 2 may be indicated a predefined, default order of selection of NADs for an online application for the case that no other customized rule is available. Provider indication in configuration groups comprising the pairs of types of providers and physical devices is necessary as devices of the same provider type might have the same configuration for accessing network and/or system resources and when media types of the same application are associated with different devices, i.e., the media types take configurations of different providers. In Figure 3 an example for provider-device association constraints are shown. It is assumed that a particular NAD, Dev2, is not capable to execute voice. According to Rule 1 another NAD, Dev1, is chosen to execute the application under question, if it is available. If Dev1 is not available, according to Rule 2 another NAD, Dev 3, of provider 2 is taken for voice-media and Dev2 of provider 1 is taken for (non-voiced) data-media. In this case, the application and the NAD configurator 14 shown in Figures 1 and 2 are aware of the fact that voice and data media have to be configured for network and service usage with configurations belonging to different providers (Peov2 and Prov1).

Rows 3 and 4 of Figure 3 describe the rules for using devices with equivalent capabilities of the same provider type, i.e. as soon as one of the devices is selected for one of the media (e.g. for data), the other media type of the application has to run on the same device (e.g. this is the voice enabled device). The order of the rules in the table can also be used for prioritizing of the executable use-cases for the purpose of being able to meet certain unique choice of devices for the application in case that all devices are available and all use-cases are possible. Prioritization can also be defined explicitly by numbering of the rules.

An example of possible prioritization of the applicable use-cases is also shown in rows 3 and 4 of the table of Figure 3. The entries of rows 3 and 4 are also interpreted as follows "Take Dev3 first if both devices Dev3 and Dev4 are available". The combination examples of rows 5 and 6 define explicit rules for device coupling of devices Dev3 and Dev4 for example for cases where one of the media types in not possibly used simultaneously to the other media type and is allowed to run on alternative device. Here, the application is aware of the usage of different devices for its media in order to apply correctly provider configurations for the different devices upon which the media is executed. Note that in case Dev3 and Dev4 are exactly equivalent and not bound to any other ordering rules, the definitions from Rows 3 to 6 can be generated automatically as all possible variants of combinations whereby the criteria for sorting of the rules are just the numbering of the devices. Note that the above example considers data and voice media but is not restricted to them.

In general, the provider to Device and to Media associations may include also other media types. In principle the IP-Data can also be separated and declared as different types of media due to the performance of the different protocols executed over the IP Layer. In this respect the different protocols are also considered to be media types and may also be associated with different NADs, e.g. a possible configuration can be: HTTP shall execute on NAD X for non-streaming text data and RTP shall execute on NAD Y for streaming audio data.

It is noted that the inventive management of individuals NADs of a terminal system can make use of Service Level Agreements (SLAs) defining restrictions for applications to be executable within the scope of rights of a particular provider. The NAD configurator 14 shown in Figures 1 and 2 can be configured to understand SLAs for individual applications. In fact, the NAD configurator 14 may be configured to couple SLAs and constraints stored in the NAD configuration database 13 shown in Figures 1 and 2 such that each application to be run by the terminal system is uniquely configured for each of its media at any time of (intended) operation.

In Figure 4 an example with two applications Appl_1 and Appl_2 is shown, wherein Appl_1 is a data-only application and Appl_2 is a voice and data application. The shown example is based on the provider/device restrictions illustrated in Figure 3. In this example a possible static configuration of the system is shown under the assumption that all defined devices are available. Note that, in general, the number of the devices, applications and the media thereof is not restricted. In order to provide fluent execution of the media, media migration to alternative device is considered as a last means of adaptation in the underlying solution. Migration of media to alternative device is possible without interruption only when the media is not active. The example in Figure 4 is taken for Appl_2 and different dynamic conditions are applied, thus, further restricting the possible variants for execution of the media. The provided solution is especially suitable for non-session aware and streaming media, where fall-back of the media state is not possible without complete interruption of the service or the fall back of the media state will cause jittering of the media due to dropping or rewinding of states and therefore to perceivable media defects for the user.

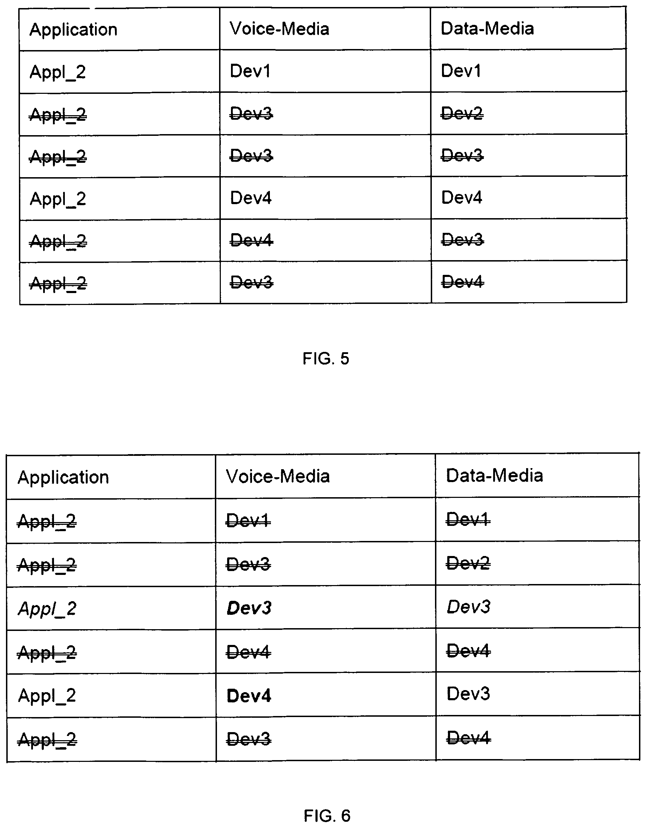

Assume one of the predefined devices is not available for the application. In this case the number of possible use cases is restricted as shown in Figure 5. The crossed out variants in Figure 5 are not possible and if the application requests for media, only the other two variants will be available. In the example shown in Figure 6, it is assumed that on start of the data media Dev1 and Dev2 were not available, so the media started on Dev3. In such case, two alternatives for potential voice traffic of the application remain, namely, on Dev3 and on Dev4. The decision logic excludes those configurations which lead to re-switching of devices for the data. The currently active configuration is shown in italics. Alternatives for non-active media (i.e. the voice) still exist and they are shown for voice in bald. Even if Dev1 or Dev2 shall be reactivated, they can be used only when the media is not active, since otherwise the media would be interrupted.

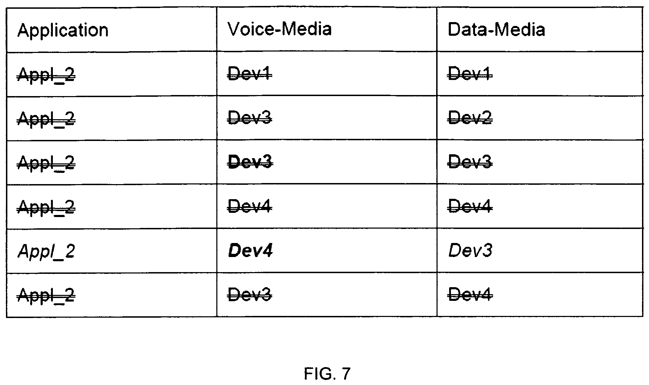

Based on the previous example, the Figure 7 shows a case where decision is taken in the case that a device loses capability, e.g. for voice, during active session, e.g. in the case that Dev3 operates within a 2G Network where data and voice are not possible in parallel. The loss of the voice capability may occur in 3G to 2G handover between base stations. One alternative remains for the voice media, i.e. in case the voice media starts the application's data and voice will be distributed on two different devices.

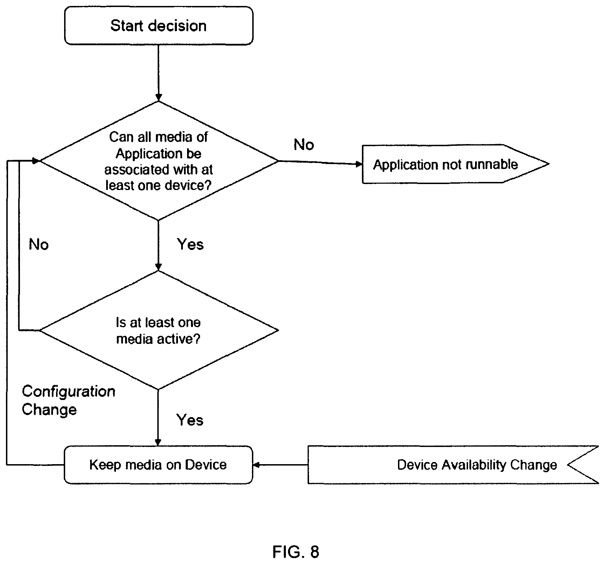

An example of an inventive media distribution algorithm is illustrated in Figure 8. The decision engine determines whether a media is still runnable on the associated devices. In case some media part of the application has no device to be associated with, the application is interrupted. Due to interruption of applications the resources of the system may be released so that the application may start again in an alternative configuration or remain non-executable. The decision engine reacts dynamically per each application and its media on activation/deactivation of devices and/or media so that interruption of running media of applications is avoided as much as possible.
All previously discussed embodiments are not intended as limitations but serve as examples illustrating features and advantages of the invention as defined in the appended claims. It is to be understood that some or all of the above described features can also be combined in different ways. It is, therefore, contemplated that the appended claim or claims will cover such modifications and variations that fall within the true scope of the invention."

## Claims

1. A computer-implemented method for controlling an automotive terminal system (10) installed in a vehicle and connected to a communication network (20) and comprising multiple network (20) access devices, NADs, (11, 12) as terminal devices, a database (13) and a computer system (15), the method comprising the steps of
reading, by the computer system (15), information on associations between the NADs and media including voice data and non-voice packet-based data and applications to be run on the computer system (15) and/or the NADs (11, 12); storing at least a part of the information in the database (13); and
based on the read information controlling, by the computer system (15), the access of
a) at least one of the applications to at least one of the NADs (11, 12) and at least one of
b) at least one of the NADs (11, 12) to a media and c) at least one of the applications to a media;
and wherein
the information comprises provider rules for associations between providers and NADs (11, 12) for providers providing services via the communication network (20) and/or constraints on associations between NADs (11, 12) and applications;
and further comprising
running, by the computer system (15), a particular application on a particular one of the NADs (11, 12) and controlling association of the particular NAD with applications such that it is only associated with another application different from the particular application, if another application of higher priority than the particular application is to use the particular NAD.

2. The computer-implemented method according to claim 1, wherein the information comprises a prioritization scheme of associations.

3. The computer-implemented method according to one of the preceding claims, wherein the information comprises Service Level Agreements for the applications.

4. The computer-implemented method according to one of the preceding claims, comprising generating for each of a plurality of applications and the associated media a list of operable NADs (11, 12).

5. The computer-implemented method according to claim 1, further comprising running a particular application on a particular one of the NADs (11, 12) of the list when another NAD of the list is not available and allowing for association of the particular application with the other NAD of the list after it becomes available only when media accessed by the particular one of the NADS (11, 12) of the list used in the particular application is not active.

6. The computer-implemented method according to claim 1, further comprising running a first application on a first NAD using a first media and subsequently starting a second application on one or more NADs (11, 12) using one or more media comprising re-associating the first NAD and the first application and/or the first media such that the first application at least partly continues running on a second NAD and/or the first NAD continues running the first application using a second media of the first application.

7. The computer-implemented method according to claim 1, further comprising running a first application on a first NAD using a first media and subsequently starting using a second media by the first application only on an NAD that is not already running an application using the second media.

8. The computer-implemented method according to one of the preceding claims, further comprising running an application on a first NAD connected to the communication network (20) and subsequently changing connection of the communication network (20) to a second NAD and continuing running the application on the second NAD.

9. Computer program product, comprising one or more computer readable media having computer-executable instructions for performing the steps of the method according to one of the preceding claims.

10. An automotive terminal system (10) installed in a vehicle and configured for connection to a communication network (20), comprising
multiple network (20) access devices, NADs (11, 12), configured for running applications using media including voice data and non-voice packet-based data;
a computer system (15) configured to control association between the NADs (11, 12) and the applications and the media based on information comprising a) provider rules for associations between providers and NADs (11, 12) for providers providing services via the communication network (20) and b) constraints on associations between NADs (11, 12) and applications; and wherein
the computer system (15) is configured to control association of a particular one of the NADs (11, 12) on which a particular application is run by the computer system (15) with applications such that it is only associated with another application different from the particular application, if another application of higher priority than the particular application is to use the particular NAD; and
further comprising a database (13) configured for storing at least part of the information and wherein the computer system (15) is configured to read the at least part of the information from the database (13).

## Patentansprüche

1. Computerimplementiertes Verfahren zum Steuern eines Automobilendgerätsystems (10), das in einem Fahrzeug installiert ist und mit einem Kommunikationsnetzwerk (20) verbunden ist und mehrere Zugriffsvorrichtungen für das Netzwerk (20), NADs (Network Access Devices), (11, 12) als Endgerätvorrichtungen, eine Datenbank (13) und ein Computersystem (15) umfasst, wobei das Verfahren die folgenden Schritte umfasst:
Ablesen von Informationen über Verbindungen zwischen den NADs und Medien, die Sprachdaten und paketbasierte Nichtsprachdaten und Anwendungen zum Ausführen im Computersystem (15) und/oder in den NADs (11, 12) beinhalten, durch das Computersystem (15);
Speichern zumindest eines Teils der Informationen in der Datenbank (13); und
auf Grundlage der abgelesenen Informationen, Steuern der folgenden Zugriffe durch das Computersystem (15):
a) mindestens einer der Anwendungen auf mindestens eine der NADs (11, 12) und mindestens eines der Folgenden:
b) mindestens einer der NADs (11, 12) auf ein Medium und c) mindestens einer der Anwendungen auf ein Medium;
und wobei
die Informationen Anbieterregeln für Verbindungen zwischen Anbietern und NADs (11, 12) für Anbieter, die Dienste über das Kommunikationsnetzwerk (20) bereitstellen, und/oder Beschränkungen von Verbindungen zwischen NADs (11, 12) und Anwendungen umfassen;
und ferner umfassend:
Ausführen einer bestimmten Anwendung auf einer bestimmten der NADs (11, 12) und Steuern der Verbindung der bestimmten NAD mit Anwendungen, derart, dass sie nur dann mit einer anderen Anwendung als der bestimmten Anwendung verbunden wird, wenn eine andere Anwendung mit einer höherer Priorität als die bestimmte Anwendung die bestimmte NAD verwenden soll, durch das Computersystem (15).

2. Computerimplementiertes Verfahren nach Anspruch 1, wobei die Informationen ein Priorisierungsschema von Verbindungen umfasst.

3. Computerimplementiertes Verfahren nach einem der vorhergehenden Ansprüche, wobei die Informationen Dienstgütevereinbarungen für die Anwendungen umfassen.

4. Computerimplementiertes Verfahren nach einem der vorhergehenden Ansprüche, umfassend das Erstellen einer Liste betreibbarer NADs (11, 12) für jede einer Vielzahl von Anwendungen und die verbundenen Medien.

5. Computerimplementiertes Verfahren nach Anspruch 1, ferner umfassend das Ausführen einer bestimmten Anwendung auf einer bestimmten der NADs (11, 12) der Liste, wenn eine andere NAD der Liste nicht verfügbar ist, und das Ermöglichen der Verbindung der bestimmten Anwendung mit der anderen NAD der Liste, nachdem sie verfügbar wird, nur dann, wenn Medien, auf welche die bestimmte der NADs (11, 12) der Liste, die in der bestimmten Anwendung verwendet wird, zugreift, nicht aktiv sind.

6. Computerimplementiertes Verfahren nach Anspruch 1, ferner umfassend das Ausführen einer ersten Anwendung auf einer ersten NAD unter Verwendung eines ersten Mediums und das darauffolgende Starten einer zweiten Anwendung auf einer oder mehreren NADs (11, 12) unter Verwendung von einem oder mehreren Medien, welches das Neuverbinden der ersten NAD und der ersten Anwendung und/oder des ersten Mediums umfasst, derart, dass die erste Anwendung zumindest teilweise auf einer zweiten NAD weiter ausgeführt wird und/oder die erste NAD die erste Anwendung unter Verwendung eines zweiten Mediums der ersten Anwendung weiter ausführt.

7. Computerimplementiertes Verfahren nach Anspruch 1, ferner umfassend das Ausführen einer ersten Anwendung auf einer ersten NAD unter Verwendung eines ersten Mediums und das darauffolgende Starten der Verwendung eines zweiten Mediums durch die erste Anwendung nur auf einer NAD, die noch keine Anwendung unter Verwendung des zweiten Mediums ausführt.

8. Computerimplementiertes Verfahren nach einem der vorhergehenden Ansprüche, ferner umfassend das Ausführen einer Anwendung auf einer ersten NAD, die mit dem Kommunikationsnetzwerk (20) verbunden ist, und das darauffolgende Ändern der Verbindung des Kommunikationsnetzwerks (20) zu einer zweiten NAD und das Fortsetzen des Ausführens der Anwendung auf der zweiten NAD.

9. Computerprogrammprodukt, umfassend ein oder mehrere computerlesbare Medien, die computerausführbare Anweisungen zum Durchführen der Schritte des Verfahrens nach einem der vorhergehenden Ansprüche aufweist.

10. Automobilendgerätsystem (10), das in einem Fahrzeug installiert ist und für eine Verbindung mit einem Kommunikationsnetzwerk (20) konfiguriert ist, wobei das System Folgendes umfasst:
mehrere Zugriffsvorrichtungen für das Netzwerk (20), NADs (11, 12), die dazu konfiguriert sind, Anwendungen unter Verwendung von Medien, die Sprachdaten und paketbasierte Nichtsprachdaten beinhalten, auszuführen;
ein Computersystem (15), das dazu konfiguriert ist, die Verbindungen zwischen den NADs (11, 12) und den Anwendungen und den Medien auf Grundlage von Informationen zu steuern, die Folgendes umfassen: a) Anbieterregeln für Verbindungen zwischen Anbietern und NADs (11, 12) für Anbieter, die Dienste über das Kommunikationsnetzwerk (20) bereitstellen, und b) Beschränkungen von Verbindungen zwischen NADs (11, 12) und Anwendungen; und wobei
das Computersystem (15) dazu konfiguriert ist, die Verbindung einer bestimmten der NADs (11, 12), auf der das Computersystem (15) eine bestimmte Anwendung ausführt, mit Anwendungen derart zu steuern, dass sie nur mit einer anderen Anwendung als der bestimmten Anwendung verbunden wird, wenn eine andere Anwendung mit höherer Priorität als die bestimmte Anwendung die bestimmte NAD verwenden soll; und
ferner umfassend eine Datenbank (13), die dazu konfiguriert ist, zumindest einen Teil der Informationen zu speichern, und wobei das Computersystem (15) dazu konfiguriert ist, zumindest den Teil der Informationen aus der Datenbank (13) abzulesen.

## Revendications

1. Procédé mis en oeuvre par ordinateur pour commander un système de terminal automobile (10) installé dans un véhicule et connecté à un réseau de communication (20) et comprenant de multiples dispositifs d'accès au réseau (20), NAD, (11, 12) en tant que dispositifs terminaux, une base de données (13) et un système informatique (15), le procédé comprenant les étapes suivantes
la lecture, par le système informatique (15), d'informations sur des associations entre les NAD et des supports comprenant des données vocales et des données non vocales à base de paquets et des applications à exécuter sur le système informatique (15) et/ou les NAD (11, 12) ;
le stockage d'au moins une partie des informations dans la base de données (13) ; et
sur la base des informations lues, la commande, par le système informatique (15), de l'accès
a) d'au moins une des applications à au moins un des NAD (11, 12) et au moins un parmi
b) d'au moins un des NAD (11, 12) à un support et c) d'au moins une des applications à un support ;
et dans lequel
les informations comprennent des règles de fournisseur pour des associations entre des fournisseurs et des NAD (11, 12) pour des fournisseurs fournissant des services par le biais du réseau de communication (20) et/ou des contraintes sur des associations entre des NAD (11, 12) et des applications ;
et comprenant en outre
l'exécution, par le système informatique (15), d'une application particulière sur l'un particulier des NAD (11, 12) et la commande d'une association du NAD particulier avec des applications de manière qu'il soit associé seulement à une autre application différente de l'application particulière, si une autre application de priorité supérieure à l'application particulière doit utiliser le NAD particulier.

2. Procédé mis en oeuvre par ordinateur selon la revendication 1, dans lequel les informations comprennent un schéma de priorisation d'associations.

3. Procédé mis en oeuvre par ordinateur selon l'une quelconque des revendications précédentes, dans lequel les informations comprennent des accords de niveau de service pour les applications.

4. Procédé mis en oeuvre par ordinateur selon l'une quelconque des revendications précédentes, comprenant la génération, pour chacune d'une pluralité d'applications et les supports associés, d'une liste de NAD (11, 12) utilisables.

5. Procédé mis en oeuvre par ordinateur selon la revendication 1, comprenant en outre l'exécution d'une application particulière sur l'un particulier des NAD (11, 12) de la liste quand un autre NAD de la liste n'est pas disponible et l'autorisation d'une association de l'application particulière avec l'autre NAD de la liste après qu'il devient disponible seulement quand un média auquel a accédé l'un particulier des NAD (11, 12) de la liste utilisé dans l'application particulière n'est pas actif.

6. Procédé mis en oeuvre par ordinateur selon la revendication 1, comprenant en outre l'exécution d'une première application sur un premier NAD en utilisant un premier support et en démarrant subséquemment une deuxième application sur un ou plusieurs NAD (11, 12) en utilisant un ou plusieurs supports comprenant la réassociation du premier NAD et de la première application et/ou du premier support de manière que la première application continue au moins en partie l'exécution sur un deuxième NAD et/ou le premier NAD continue l'exécution de la première application en utilisant un deuxième support de la première application.

7. Procédé mis en oeuvre par ordinateur selon la revendication 1, comprenant en outre l'exécution d'une première application sur un premier NAD en utilisant un premier support et en démarrant subséquemment l'utilisation d'un deuxième support par la première application seulement sur un NAD qui n'exécute pas déjà une application en utilisant le deuxième support.

8. Procédé mis en oeuvre par ordinateur selon l'une quelconque des revendications précédentes, comprenant en outre l'exécution d'une application sur un premier NAD connecté au réseau de communication (20) et le changement subséquent d'une connexion du réseau de communication (20) à un deuxième NAD et la poursuite de l'exécution de l'application sur le deuxième NAD.

9. Produit de programme informatique, comprenant un ou plusieurs supports lisibles par ordinateur comportant des instructions exécutables par ordinateur pour effectuer les étapes du procédé selon l'une quelconque des revendications précédentes.

10. Système de terminal automobile (10) installé dans un véhicule et configuré pour la connexion à un réseau de communication (20), comprenant
de multiples dispositifs d'accès au réseau (20), NAD, (11, 12) configurés pour exécuter des associations utilisant des supports comprenant des données vocales et des données non vocales à base de paquets ;
un système informatique (15) configuré pour commander une association entre les NAD (11, 12) et les applications et les supports sur la base d'informations comprenant a) des règles de fournisseur pour des associations entre des fournisseurs et des NAD (11, 12) pour des fournisseurs fournissant des services par le biais du réseau de communication (20) et b) des contraintes sur des associations entre des NAD (11, 12) et des applications ; et dans lequel
le système informatique (15) est configuré pour commander une association d'une application d'un particulier des NAD (11, 12) sur lequel une application particulière est exécutée par le système informatique (15) avec des applications de manière qu'il soit associé seulement à une autre application différente de l'application particulière, si une autre application de priorité supérieure à l'application particulière doit utiliser le NAD particulier ; et
comprenant en outre une base de données (13) configurée pour stocker au moins une partie des informations et dans lequel le système informatique (15) est configuré pour lire l'au moins une partie des informations à partir de la base de données (13) .
